# EUROPÄISCHE PATENTSCHRIFT

(11) **EP 2 638 217 B1**
(45) Veröffentlichungstag und Bekanntmachung des Hinweises auf die Patenterteilung: **03.05.2017**
(21) Anmeldenummer: 10778641.0
(22) Anmeldetag: 11.11.2010
(51) Int. Cl.: E04B 1/88, C04B 14/06, C08J 9/35, C08K 3/36, C08K 9/04

(54) **AEROGEL-AEROGEL-VERBUNDWERKSTOFF**
AEROGEL-AEROGEL COMPOSITE MATERIAL
MATÉRIAU COMPOSITE AÉROGEL-AÉROGEL

(43) Veröffentlichungstag der Anmeldung: 18.09.2013
(73) Patentinhaber: Deutsches Zentrum Für Luft- Und Raumfahrt E.V. (DLR), 51147 Köln (DE)
(72) Erfinder: MILOW, Barbara, 50534 Hürth (DE); RATKE, Lorenz, 53757 St. Augustin (DE)
(74) Vertreter: dompatent von Kreisler Selting Werner - Partnerschaft von Patent- und Rechtsanwälten mbB
(86) Internationale Anmeldenummer: PCT/EP2010/067302
(87) Internationale Veröffentlichungsnummer: WO 2012/062370

(56) Entgegenhaltungen:
- EP-A1- 0 672 635
- DE-A1- 10 300 979
- US-A1- 2007 259 979

## Beschreibung

Die Erfindung betrifft ein Verfahren zur Herstellung eines Aerogel-Aerogel Verbundwerkstoffes zur Wärme- und Schalldämmung.

Die Wärmedämmung von Gebäuden zur Einsparung von Heizenergie hat im Rahmen des Bewusstwerdens für nachhaltige Entwicklung und der Verteuerung von Energie in den Neunziger Jahren des Zwanzigsten Jahrhunderts einen hohen Stellenwert erhalten. Insbesondere auch deshalb, weil zeitgleich gesetzliche Vorgaben zur Wärmedämmung von Gebäuden beschlossen wurden. Baustoffe wie Stahl, Beton und Glas, aber auch Natursteine sind relativ gute Wärmeleiter, so dass daraus errichtete Außenwände von Gebäuden bei kalter Witterung sehr schnell die Wärme von der Innenseite an die Außenseite abgeben. Ebenso gelangt beispielsweise bei Sonneneinstrahlung die Wärme von außen ins Innere.

Will man mit solchen Baumaterialien die Außenwände von Gebäuden errichten, welche die nach heutigen Maßstäben gewünschte, niedrige Wärmeleitfähigkeit haben, sind Wände mit so großer Wandstärke erforderlich, dass der Grundstücksflächenverbrauch für das Gebäude und der Materialaufwand unerwünscht ansteigen. Entsprechend werden die Außenwände solcher Gebäude, zum Teil auch nachträglich, mit Dämmstoffe versehen, um so den Heizenergiebedarf zu reduzieren. Gleichzeitig wird auch der sommerliche Hitzeschutz verbessert, da die Wärme nur langsam in das Gebäude eindringt. Eine adäquate Wärmedämmung wird technisch heute gelöst durch Verwendung von Dämmmitteln, wie beispielsweise Stein- oder Glaswolle, Polystyrol- oder Polyurethanschaum und Schüttgütern aller Art, wie beispielsweise Perlite, Zellulose oder Kork. Auch Fasern aus natürlichen organischen Materialien, wie Holzfaserdämmplatten, Holzwolle, Zellulose, Wolle oder ähnliches, finden Anwendung als Dämmmaterial.

Neben einer ausreichenden Wärmedämmung sollte ein Dämmmaterial auch eine hinreichende Schalldämmung aufweisen. Schalldämmung bezeichnet die Behinderung der Schallausbreitung von Luftschall durch Schallreflexion des sich ausbreitenden Schalls. Dies kann im Hausbau durch eine entsprechend solide Wand erreicht werden. Eine Schalldämmung kann aber auch beispielsweise mit einer Gipskartonplatte erreicht werden. Der Schall wird hier durch eine Platte absorbiert, die selbst schwingen kann. Auch ein Brechen der Schallwellen führt zu einer Schalldämmung.

Die bisher genannten Materialien eigenen sich neben der Wärme- auch zur Schalldämmung. Bei der Auswahl der Materialien ist die geplante Anwendung zu berücksichtigen. So weisen mineralische Fasern wie Steinwolle, Mineralwolle oder Glaswolle eine gute Dämmfähigkeit auf, sind schimmel- und ungezieferresistent und unbrennbar. Die Handhabung dieser Faserstoffe ist jedoch häufig unangenehm, da hier Feinstäube freiwerden, die dann in die Lunge gelangen können. Häufig werden zur Modifizierung der Eigenschaften Kunstharze und Zusatzstoffe beigefügt, weiche dann ausdampfen können. Mineralische Fasern sind außerdem häufig feuchtigkeitsempfindlich.

Auch beim Arbeiten mit Schüttgütern kann es zu einer Feinstaubbelastung kommen. Zudem werden Schüttgüter in der Regel pulverisiert, wenn sie in Anlagen betrieben werden, welche permanenten Erschütterungen oder Vibration ausgesetzt sind. Es kann daher möglich sein, dass eine Nachschüttung zur Aufrechterhaltung der Dämmleistung erforderlich wird.

Künstliche organische Schäume, wie beispielsweise Polyurethan oder Polystyrol weisen ebenfalls eine gute Wärmedämmung auf. Im Brandfall besteht jedoch die Gefahr einer starken Rauchbildung. Zudem sind solche polymeren Schäume meist nicht UV-beständig.

Fasern aus natürlichen organischen Materialien weisen oft keinen ausreichenden Brandschutz auf, weswegen sie mit einem Borsalz, beispielsweise Borax behandelt werden. Borsalze sind ökologisch jedoch bedenklich. Viele natürliche Materialien, wie beispielsweise Baumwolle, sind außerdem nicht feuchtigkeitsresistent. Bei längerer Durchfeuchtung ist ein Pilzbefall möglich.

Diese üblicherweise zur Wärmedämmung verwendeten Materialien haben eine Wärmeleitfähigkeit A von 30mW/(Km) (Polyurethanschaum), 50 mW/(Km) (Steinwolle) oder 100 mW/(Km) (Holzwolle-Bauplatten, Heraklith).

Als Baustoffe, welche sowohl wärme-, wie auch schalldämmende Eigenschaften aufweisen, haben sich Aerogele herausgestellt. Aerogele sind hochporöse Festkörper, bei denen bis zu 95% des Volumens aus Poren bestehen. Es sind auch Anwendungen bekannt, in denen Aerogele als Füllstoffe zur Wärmedämmung eingesetzt werden.

In DE 3814968 A1 werden Dämmstoffe mit einer Dichte von 0,1 bis 0,4 g/cm³ mit gutem Wärmedämmvermögen und ausreichend hoher Druckfestigkeit beschrieben. Diese werden dadurch erhalten, dass Silica-Aerogel-Partikel mit einem anorganischen oder organischen Bindemittel verklebt werden. Die Aushärtung erfolgt bei etwa 125° C.

DE 197 35 648 A1 betrifft ein Verfahren zur Herstellung eines anorganischen Dämmstoffes. Es werden oxidische Aerogele mit einer wässrigen Polysiloxanemulsion vermischt, wobei die Oberfläche der oxidischen Aerogele möglichst vollständig mit der Emulsion benetzt und anschließend der kompakte Verbund ausgehärtet wird.

DE 196 24 500 A1 beschreibt eine Vorrichtung, die einen mit Ruß eingefärbten mikrozellulären Füllstoff umfasst. Der mikrozelluläre Füllstoff ist ein Aerogel auf SiO₂-Basis oder ein Aerogel auf Metalloxidbasis, mit einem mittleren Durchmesser der Partikel von 0,001 bis 5 mm.

EP 2 000 607 A2 beschreibt einen Formstein, welcher wenigstens eine Öffnung aufweist, wobei der entstehende Hohlraum bereichsweise mit einem Dämmstoff befüllt ist. Als Dämmstoff findet beispielsweise ein Silica-Aerogel Verwendung. Ein solcher Formstein wird mit einem losen Dämmstoffschüttmaterial befüllt, das Aerogel-Granulat wird also lediglich in den Hohlraum des Steins eingeschüttet.

Ein Verbundwerkstoff, welcher Aerogel-Partikel enthält, wird in WO 2006/032655 A2 offenbart. Hydrophobe Aerogel-Partikel werden mit einem anorganischen Bindemittel und einem Dispergiermittel gemischt. Ein solcher Verbundwerkstoff kann beispielsweise Verwendung als wärmedämmender Werkstoff oder als Brandschutzwerkstoff finden.

DE 102 11 331 A1 umfasst maschinell applizierbare Schall-/ Wärmedämmung und Verfahren zum Applizieren derselben. Ein hier beschriebenes wärme- und/oder schalldämmendes Material ist aerogelhaltig. Der Anteil an Aerogel-Partikeln liegt im Bereich von 5 bis 97 Vol.-%. Als Aerogel-Partikel werden vorzugsweise Silica-Aerogele verwendet.

DE 103 00 979 A1 beschreibt ultraleichte Verbundwerkstoffe hoher Tragfähigkeit mit stark anisotropen Eigenschaften, insbesondere Wärmeleitfähigkeit, ein Verfahren zu ihrer Herstellung sowie ihre Verwendung als Konstruktionswerkstoffe im Flugzeug- und Fahrzeugbau. Die Fasern werden somit von einem polymeren Aerogel-Binder als Matrix eingebettet.

Eine Isolierung mit Hilfe von Aerogelen ist nicht nur bei Baustoffen beschrieben. Eine Isolierung in einer Fensterkonstruktion, beziehungsweise einem Fensterrahmen, wird in EP 1 225 297 A1 beschrieben. Der Fensterrahmen weist Silica-Aerogel als dichtgepacktes Dämmmaterial auf. Da Aerogele transparent sind, können sie auch zur Wärmedämmung von Folien-Sonnenkollektoren verwendet werden, wie dies in EP 1 176371 A2 beschrieben ist. Auch die Wärmedämmung einer Wärmequelle ist, wie in EP 0035 280 A2 beschrieben, möglich.

Die Aufgabe der vorliegenden Erfindung ist daher die Bereitstellung eines Verbundwerkstoffes mit einer geringen Dichte, der gleichzeitig eine gute Wärme- und Schalldämmung gewährleistet. Ein solcher Verbundwerkstoff besitzt eine geringe Wärmeleitfähigkeit, dass heißt der Wärmedurchgangskoeffizient U-Wert ist vergleichbar mit oder besser als bei anderen aus dem Stand der Technik bekannten Materialien. Des Weiteren ist das Rohmaterial gießfähig und damit in jede beliebige Form zu bringen. Gleichzeitig weist er eine hohe Festigkeit auf. Durch seine flexible Verarbeitung kann er nicht nur als Dämmmaterial im Hausbau angewandt werden, sondern auch bei der Schall- und Wärmeisolierung beispielsweise bei Klimageräten Anwendung finden.

Die Erfindung betrifft ein Verfahren zur Herstellung eines Verbundwerkstoffes wie im Anspruch 1 beschrieben. hat ein erfindungsgemäßer Verbundwerkstoff aus mindestens einem hydrophoben Aerogel-Granulat und mindestens einem polymeren Aerogel-Binder als Matrix die gewünschten Eigenschaften, wobei die Nachteile aus dem Stand der Technik vermieden werden. Ein erfindungsgemäßes hydrophobes Aerogel-Granulat weist vorzugsweise eine Korngröße im Bereich von 0,1 mm bis 10 mm, insbesondere von 0,5 mm bis 5 mm auf. Es handelt sich bevorzugt um Silica-Aerogel-Granulat. Die Hydrophobizität des Granulats kann beispielsweise durch eine Modifizierung mit Methylgruppen, beispielsweise mit einer Trimethylsilyloximodifikation erreicht werden. Ein solches hydrophobes Aerogel-Granulat ist nicht mit Wasser mischbar. In einer wässrigen Lösung schwimmt das Granulat auf der Oberfläche.

Bei dem polymeren Aerogel-Binder handelt es sich vorzugsweise um RF-Aerogel-Binder. Ein RF-Aerogel ist ein organisches Aerogel oder ein Kohlenstoff-Aerogel, das aus Resorcin und Formaldehyd aus dem sich die polymere Matrix des Bindemittels für die Aerogelgranulate und die Fasern bildet hergestellt wird. Der Vorteil der RF-Aerogele gegenüber SiO₂-Aerogelen liegt darin, dass diese nicht überkritisch getrocknet werden müssen. Sie weisen außerdem eine höhere Steifigkeit als die SiO₂-Aerogele auf.

Bei dem polymeren Aerogel-Binder handelt es sich erfindungsgemäß vorzugsweise um eine wässrige Lösung und gegebenenfalls einen Polymerisationskatalysator. Das hydrophobe Aerogel-Granulat lässt sich naturgemäß nicht ohne weiteres in die wässrige Lösung einrühren. Überraschenderweise hat sich gezeigt, dass ein Überschichten der wässrigen Lösung mit dem hydrophoben Aeorgel-Granulat dazu führt, dass ein Einrühren und homogenes Verteilen des hydrophoben Granulats möglich wird. Die Wirkung der Dämpfe auf das hydrophobe Granulat ist überraschend. Das superhydrophobe Material wird offensichtlich durch die Einwirkung des Dampfes aktiviert, so dass es leicht und gut benetzt in die angelierte Lösung eingerührt werden kann, trotz ihres hohen Wassergehaltes.

Ein erfindungsgemäßer Verbundwerkstoff weist insbesondere eine Dichte im Bereich von 30 kg/m³ bis 300 kg/m³, insbesondere von 50 kg/m³ bis 250 kg/m³ auf. Die Wärmeleitfähigkeit liegt beispielsweise im Bereich von 20 bis 100 mW/(Km), insbesondere 30 bis 50 mW/(Km). Der Werkstoff hat bel einer Baudicke von 5 cm bevorzugt U-Werte von kleiner 1, insbesondere im Bereich von 0,6 bis 1. Der U-Wert (U= Wärmedurchgangskoeffizient) ist ein Maß für den Wärmestromdurchgang durch eine ein- oder mehrlagige Materialschicht, wenn auf beiden Seiten verschiedene Temperaturen anliegen. Er gibt die Energiemenge an, die in einer Sekunde durch eine Fläche von 1 m² fließt, wenn sich die beidseitig anliegenden Lufttemperaturen stationär um 1 K unterscheiden. Er wird angegeben in W/(Km²) und ist eine spezifische Kennzahl der Materialzusammensetzung eines Bauteils.

In einer weiteren Ausführungsform werden in die zähflüssige Aerogel-Aerogel-Mischung kurze Glasfasern oder Textilfaser-Abschnitte eingerührt. Hierdurch wird eine zusätzliche mechanische Verstärkung des Verbundwerkstoffes erreicht. Der Anteil an zugesetzten Fasern kann bis zu 10 Vol.-%, insbesondere bis zu 5 Vol.-% betragen.

Eine erfindungsgemäße Aerogel-Aerogel-Mischung kann vor oder nach Zugabe von Fasern in eine entsprechende Form gegossen werden. Es ist dadurch möglich, die Mischung in praktisch jede Form zu bringen.

In einer weiteren Ausführungsform wird der Verbundwerkstoff bei der Herstellung direkt durch ein Gewebe aus Naturfaser beschichtet, sodass eine Platte entsteht, die eine hohe Festigkeit hat. Eine reine Naturfaser, wie beispielsweise Baumwolle oder Cellulose, verbindet sich sehr gut mit der Aerogel-Aerogel-Mischung. Da es sich hierbei um eine wässrige Mischung handelt, quillt die Naturfaser mit dem Wasser auf und integriert sich dadurch in der Verbundstruktur. Die Biege-Bruch-Festigkeit eines solchen Werkstoffes, bei dem eine Naturfaser mit einer Aerogel-Aerogel-Mischung beschichtet wird, liegt beispielsweise im Bereich von 10 bis 15 MPa. Ein solcher Werkstoff ist temperaturbeständig bis 350° C.

Entsprechend kann ein erfindungsgemäßer Aerogel-Aerogel-Verbundwerkstoff nicht nur zur Wärme-/ und Schalldämmung im Hausbau verwendet werden. Zur Isolation von Klimageräten oder -anlagen, Lüftungskanälen, Wärmetauschern, Brandschutzklappen und ähnlichem werden beispielsweise Metallkästen verwendet, welche mit einem erfindungsgemäßen Werkstoff gefüllt werden können und somit zu einer adäquaten Schall- und Wärmedämmung führen. Allgemein ist mit dem erfindungsgemäßen Werkstoff eine Wärme- und Schallisolierung von Geräten und Anlagen möglich, beispielsweise auch im Fahrzeugbau bei der Umkapselung von Motoren.

### Ausführungsbeispiele:

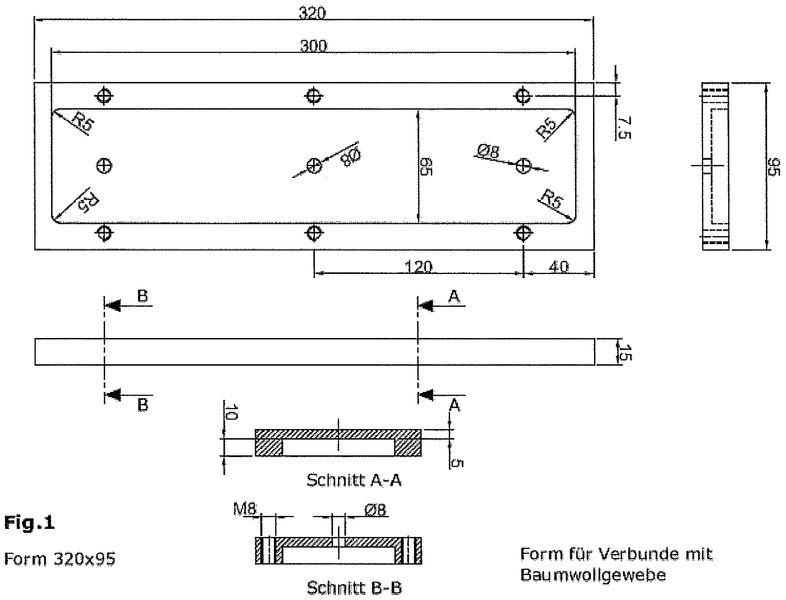

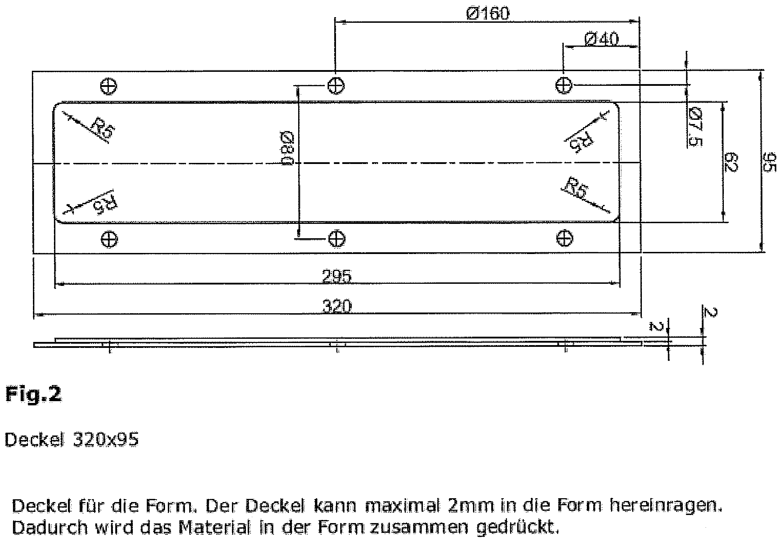

1. Zur Herstellung des Verbundes von hydrophoben Aerogel-Granulat in einer Matrix aus organischem Resorcin-Formaldehyd (RF)-Aerogel wurde zunächst eine Aerogellösung der folgenden Zusammensetzung in Gew.-Teilen: Resorcin:H₂O (deion.) (0,044:1), Resorcin:Formaldehydlösung (0,72:1), Resorcin:Na₂CO₃ (1512:1), unter Rühren auf ca. 40°C erhitzt. Die wässrige Lösung wurde im Volumenverhältnis 1:1 mit hydrophoben Aerogel-Granulat (CABOT Nanogel GmbH, Frankfurt, Nanogel ®, transluzentes Aerogel, Silica, [(trimethylsilyl)oxy]-modified) überschichtet. Damit wird das Abdampfen der Lösung verhindert und das Granulat zum homogenen Einrühren vorbehandelt. Sobald die Lösung zu gelieren begann, wurde das hydrophobe Aerogel-Granulat in die Masse unter Rühren homogen eingebunden.
   Die noch zähflüssige Masse konnte nun in die gewünschte Form gebracht werden (Zylinder der Höhe 50 mm und Durchmesser 20 mm) und trocknet bei 40°C vollständig innerhalb von 4 h. Die Trocknung verlief schrumpfungsfrei. Die Dichte des getrockneten Verbundes lag bei 135 [g/ml]. Die Wärmeleitfähigkeit betrug: 0,045 [W/(Km)].
2. Ein Aerogelverbund mit Baumwollegeweben wurde dadurch hergestellt, dass in eine rechteckige Form der Innenabmessungen 65 mm Breite x 300mm Länge x 10 mm Höhe ein passend zugeschnittenes Gewebe eingelegt wurde (2-lagig), dann die im 1. Beispiel genannte RF-Aerogelhydrophobes Granulat Mischung eingegossen wurde und die Masse durch zwei Lagen Gewebe abgeschlossen wurde (hier kann ein Überträufeln mit einer RF-Aerogellösung notwendig sein, damit das Gewebe gut mit RF-Aerogellösung durchtränkt wird und die Anhaftung verbessert wird). Danach wurde die Form mit einem Edelstahldeckel geschlossen und Druck auf das Material ausgeübt, bis etwas RF-Aerogellösung durch geeignete Überlaufrinnen auslief. Der Deckel drang ein wenig in die Form ein. Fig. 1 zeigt die technische Zeichnung der eigentlichen Form. Fig. 2 ist die Technische Zeichnung des Deckels. Anschließend wurde die Form in einen Trockenschrank bei 40°C gestellt und die Gelation und Trocknung innerhalb von 4h beendet. Das finale Werkstück wurde aus der Form genommen und getestet. Die Wärmeleitfähigkeit wurde vom Aerogelverbundkern bestimmt. Die Festigkeit lag bei 15±5 MPa.

## Patentansprüche

1. Verfahren zur Herstellung eines Verbundwerkstoffes, umfassend mindestens ein hydrophobes Aerogel-Granulat sowie mindestens einen polymeren Aerogel-Binder, **dadurch gekennzeichnet, dass** der polymere Aerogel-Binder, welcher in Form einer wässrigen Lösung vorliegt, mit dem hydrophoben Aeroget-Granulat zunächst überschichtet und nach dem Angelieren der wässrigen Lösung in diese eingerührt wird.

2. Verfahren gemäß Anspruch 1, **dadurch gekennzeichnet, dass** ein Aerogel-Granulat mit einer Korngröße im Bereich von 0,5 bis 10 mm eingesetzt wird.

3. Verfahren gemäß Anspruch 1 oder 2, **dadurch gekennzeichnet, dass** als hydrophobes Aerogel-Granulat ein Silica-Aerogel-Granulat eingesetzt wird umfaßt.

4. Verfahren gemäß einem der Ansprüche 1 bis 3, **dadurch gekennzeichnet, dass** als polymerer Aerogel-Binder ein Resorcin-Formaldehyd-Aerogel-Binder eingesetzt wird.

5. Verfahren gemäß einem der Ansprüche 1 bis 4 zur Herstellung eines Verbundwerkstoffs, der eine Dichte im Bereich von 30 bis 300 kg/m³, insbesondere 50 bis 250 kg/m³ aufweist.

6. Verfahren gemäß einem der Ansprüche 1 bis 5 zur Herstellung eines Verbundwerkstoffs, dessen Wärmeleitfähigkeit im Bereich von 20 bis 100 mW/(Km), insbesondere im Bereich von 30 bis 50 mW/(Km) liegt.

7. Verfahren gemäß einem der Ansprüche 1 bis 6 zur Herstellung eines Verbundwerkstoffs, der bei 5 cm Baudicke einen Wärmedurchgangskoeffizienten kleiner 1, insbesondere 0,6 bis 1 aufweist.

8. Verfahren gemäß einem der Ansprüche 1 bis 7, **dadurch gekennzeichnet, dass** die erhaltene zähflüssige Masse in eine Form gegossen und anschließend vollständig getrocknet wird.

9. Verfahren gemäß einem der Ansprüche 1 bis 7, **dadurch gekennzeichnet, dass** nach dem Einrühren des Aerogel-Granulats Glasfasern und/oder Textilfaserabschnitte in die Mischung eingerührt werden.

10. Verfahren gemäß Anspruch 9, **dadurch gekennzeichnet, dass** die Aerogel-Aerogel-Mischung vor oder nach Zugabe der Glasfasern und/oder Textilfaserabschnitte in eine Form gegossen und im letzten Schritt vollständig getrocknet wird.

11. Verfahren gemäß einem der Ansprüche 1 bis 10, **dadurch gekennzeichnet, dass** die nach dem Einrühren des Aerogel-Granulats erhaltene zähflüssige Masse direkt durch ein Gewebe aus Naturfaser beschichtet wird.

12. Verfahren gemäß Anspruch 11, **dadurch gekennzeichnet, dass** als Naturfaser Baumwolle eingesetzt wird.

13. Verfahren gemäß Anspruch 12 zur Herstellung eines Verbundwerkstoffs, der er eine Biege-Bruch-Festigkeit von 10 bis 15 MPa aufweist.

## Claims

1. A process for preparing a composite material comprising at least one hydrophobic aerogel granulate and at least one polymeric aerogel binder, **characterized in that** said polymeric aerogel binder, which is in the form of an aqueous solution, is at first covered by a layer of said hydrophobic aerogel granulate, and after the initial gelling of the aqueous solution, the granulate is stirred into said aqueous solution.

2. The process according to claim 1, **characterized in that** an aerogel granulate having a grain size within a range of from 0.5 to 10 mm is employed.

3. The process according to claim 1 or 2, **characterized in that** a silica aerogel granulate is employed as said hydrophobic aerogel granulate.

4. The process according to any of claims 1 to 3, **characterized in that** a resorcinol-formaldehyde aerogel binder is employed as said polymeric aerogel binder.

5. The process according to any of claims 1 to 4 for preparing a composite material that has a density within a range of from 30 to 300 kg/m³, especially from 50 to 250 kg/m³.

6. The process according to any of claims 1 to 5 for preparing a composite material whose thermal conductivity is within a range of from 20 to 100 mW/(Km), especially within a range of from 30 to 50 mW/(Km).

7. The process according to any of claims 1 to 6 for preparing a composite material that has a heat transition coefficient of less than 1, especially from 0.6 to 1, for a construction thickness of 5 cm.

8. The process according to any of claims 1 to 7, **characterized in that** the viscous mass obtained is cast into a mold and subsequently dried completely.

9. The process according to any of claims 1 to 7, **characterized in that** glass fibers and/or textile fiber segments are stirred into the mixture after the aerogel granulate has been stirred in.

10. The process according to claim 9, **characterized in that** the aerogel-aerogel mixture is cast into a mold and dried completely in the last step, before or after the glass fibers and/or textile fiber segments are added.

11. The process according to any of claims 1 to 10, **characterized in that** the viscous mass obtained after the aerogel granulate has been stirred in is directly coated by a fabric of natural fiber.

12. The process according to claim 11, **characterized in that** cotton is employed as said natural fiber.

13. The process according to claim 12 for preparing a composite material that has a flexural strength of from 10 to 15 MPa.

## Revendications

1. Procédé pour préparer un matériau composite comprenant au moins un granulé à base d'aérogel hydrophobe et au moins un liant à base d'aérogel polymérique, **caractérisé en ce que** ledit liant à base d'aérogel polymérique, qui se présente sous forme d'une solution aqueuse, est d'abord couvert d'une couche dudit granulé à base d'aérogel hydrophobe, qui est agité dans la solution aqueuse après que la dernière ait commencé à gélifier.

2. Procédé selon la revendication 1, **caractérisé en ce qu'**un granulé à base d'aérogel ayant une granulométrie comprise dans la gamme de 0,5 à 10 mm est utilisé.

3. Procédé selon la revendication 1 ou 2, **caractérisé en ce qu'**un granulé à base d'aérogel de silice est utilisé en tant que granulé à base d'aérogel hydrophobe.

4. Procédé selon l'une quelconque des revendications 1 à 3, **caractérisé en ce qu'**un liant à base d'aérogel de résorcinol-formaldéhyde est utilisé en tant que granulé à base d'aérogel polymérique.

5. Procédé selon l'une quelconque des revendications 1 à 4 pour préparer un matériau composite qui présente une densité comprise entre 30 et 300 kg/m³, notamment entre 50 et 250 kg/m³.

6. Procédé selon l'une quelconque des revendications 1 à 5 pour préparer un matériau composite dont la conductivité thermique est comprise entre 20 et 100 mW/(Km), notamment comprise entre 30 et 50 mW/(Km).

7. Procédé selon l'une quelconque des revendications 1 à 6 pour préparer un matériau composite qui présente un coefficient de transfert thermique de moins de 1, notamment allant de 0,6 à 1, pour une épaisseur de construction de 5 cm.

8. Procédé selon l'une quelconque des revendications 1 à 7, **caractérisé en ce que** la masse visqueuse obtenue est coulée dans un moule et ensuite complètement séchée.

9. Procédé selon l'une quelconque des revendications 1 à 7, **caractérisé en ce que** des fibres de verre et/ou des segments de fibres textiles sont agités dans le mélange après que le granulé à base d'aérogel ait été agité dans la solution.

10. Procédé selon la revendication 9, **caractérisé en ce que** le mélange aérogelaérogel est coulé dans un moule et complètement séché dans la dernière étape avant ou après que les fibres de verre et/ou les segments de fibres textiles aient été ajoutés.

11. Procédé selon l'une quelconque des revendications 1 à 10, **caractérisé en ce que** la masse visqueuse obtenue après que le granulé à base d'aérogel ait été agité dans la solution est directement enduite d'un tissu en fibres naturelles.

12. Procédé selon la revendication 11, **caractérisé en ce que** du coton est utilisé comme fibre naturelle.

13. Procédé selon la revendication 12 pour préparer un matériau composite qui présente une résistance à la rupture par flexion allant de 10 à 15 MPa.
